Europäisches Patentamt

European Patent Office

Office européen des brevets

(11) Veröffentlichungsnummer : **0 049 878**
**B1**

(12) **EUROPÄISCHE PATENTSCHRIFT**

(45) Veröffentlichungstag der Patentschrift :
**29.02.84**

(21) Anmeldenummer : **81108141.3**

(22) Anmeldetag : **09.10.81**

(51) Int. Cl.³ : **B 23 B 31/26,** B 23 B 31/20

(54) Mechanische Spanneinrichtung für rotierende Backenfutter oder Spannzangen.

(30) Priorität : **09.10.80 DE 3038208**

(43) Veröffentlichungstag der Anmeldung :
**21.04.82 Patentblatt 82/16**

(45) Bekanntmachung des Hinweises auf die Patenterteilung : **29.02.84 Patentblatt 84/09**

(84) Benannte Vertragsstaaten :
**AT BE CH FR GB LI NL SE**

(56) Entgegenhaltungen :
**CH-A- 289 772**
**DE-B- 1 752 732**
**US-A- 1 348 740**
**US-A- 2 479 973**
**US-A- 2 675 240**

(73) Patentinhaber : **SIEMENS AKTIENGESELLSCHAFT**
**Berlin und München Wittelsbacherplatz 2**
**D-8000 München 2 (DE)**

(72) Erfinder : **Krause, Dieter**
**Ravensburger Ring 65**
**D-8000 München 60 (DE)**

## Mechanische Spanneinrichtung für rotierende Backenfutter oder Spannzangen

Die Erfindung bezieht sich auf eine mechanische Spanneinrichtung für rotierende Bakkenfutter oder Spannzangen, bei der rotationssymmetrische Teile von außen oder von innen mit Hilfe vorgespannter Federn spannbar sind, welche in einer Bohrung einer Spindel angeordnet und durch Axialverschiebung einer mit dem Backenfutter bzw. der Spannzange in Verbindung stehenden Zug- oder Druckstange vorspannbar sind (vergl. US-A-2675240).

Mit den bekannten mechanischen Spanneinrichtungen dieser Art können rotationssymmetrische Teile in einem rotierenden Backenfutter oder einer rotierenden Spannzange entweder nur von außen oder nur von innen gespannt werden. Bekannt sind ferner Spanneinrichtungen für Werkzeugmaschinen, die pneumatisch, hydraulisch oder elektromagnetisch rotierende Backenfutter und Spannzangen betätigen.

Der Erfindung liegt die Aufgabe zugrunde, eine mechanische Spanneinrichtung der eingangs genannten Art zu schaffen, mit der rotationssymmetrische Teile in einem rotierenden Backenfutter oder in einer rotierenden Spannzange sowohl von außen als auch von innen gespannt werden können.

Diese Aufgabe wird bei einer mechanischen Spanneinrichtung der eingangs genannten Art derart gelöst, daß in der Bohrung der Spindel zwei axial verschiebbare scheibenförmige Federteller angeordnet sind, die von zwischen ihnen angeordneten Druckfedern in ihre Endstellungen gedrückt werden, daß zentrisch zu den scheibenförmigen Federtellern ein das Backenfutter bzw. die Spannzange betätigender Schieber angeordnet ist, der im nichtrotierenden Zustand der Spindel wahlweise mit einem der beiden Federteller derart kuppelbar ist, daß bei jedem Spannvorgang der jeweils mit dem Schieber gekuppelte Federteller entgegen der Kraftrichtung der Druckfedern bewegbar ist.

Auf diese Weise kann die Kraftrichtung der auf den Schieber wirkenden Druckfedern um 180° geändert werden. Dadurch kann auf einfache Weise ein Backenfutter oder eine Spannzange schnell von Innen- auf Außenspannung und umgekehrt umgestellt werden.

Vorzugsweise ist zur Kupplung des Schiebers mit einem der beiden Federteller am Schieber mindestens je ein jedem Federteller zugeordneter Nocken ausgebildet, der in einer bajonettverschlußartigen Ausnehmung in der Bohrung des zugeordneten Federtellers einrastbar ist.

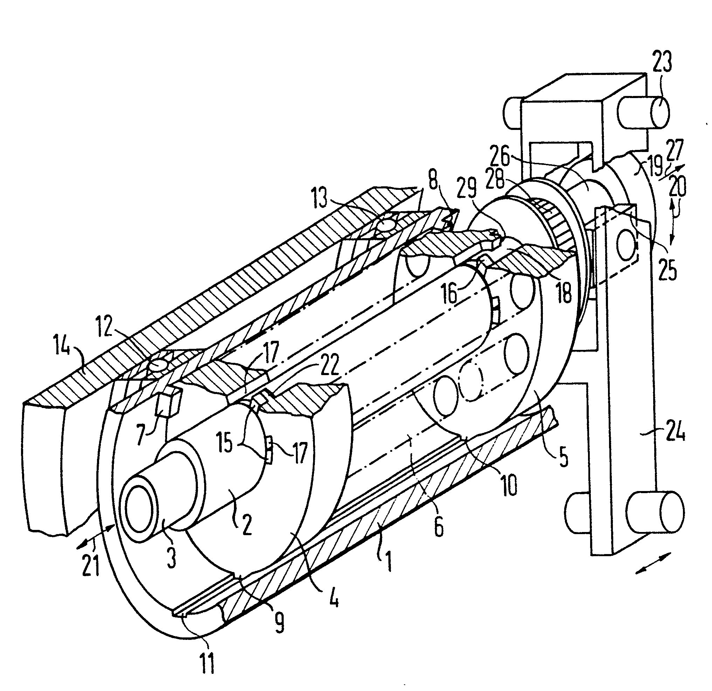

Anhand der Zeichnung, in der ein Ausführungsbeispiel einer mechanischen Spanneinrichtung dargestellt ist, wird die Erfindung näher erläutert. Die Figur zeigt einen Schnitt durch eine Spindel einer Werkzeugmaschine, wobei nur die zum Verständnis der Erfindung notwendigen Teile dargestellt sind.

Mit 1 ist eine Spindel bezeichnet, die im vorderen Teil einen in der Zeichnung nicht dargestellten Spindelkopf aufweist, der in an sich bekannter Weise mit einer Spannzange oder einem Backenfutter versehen ist. In beiden Fällen wirkt ein kegelförmiger Teil mit einer Kegelbohrung derart zusammen, daß bei relativer Verschiebung der beiden Teile ein rotationssymmetrischer Teil von außen oder von innen gespannt wird. Diese axiale Relativbewegung zwischen Kegel und Kegelbohrung erfolgt in an sich bekannter Weise über eine Zug- oder Druckstange, die bei der erfindungsgemäßen Spanneinrichtung als rohrförmiger Schieber 2 ausgebildet ist, der an seinem Ende 3 ein Gewinde für ein Backenfutter oder eine Spannzange trägt. Die Achse des rohrförmigen Schiebers 2 fluchtet genau mit der Achse der Spindel 1; er wird gehalten durch zwei scheibenförmige Federteller 4 und 5, welche in der Bohrung der Spindel 1 axial verschiebbar angeordnet sind, zwischen denen Druckfedern 6 angeordnet sind, die die Federteller 4 und 5 gegen Anschläge 7 und 8 drücken, die fest mit der Spindel 1 verbunden sind. Der Übersicht halber sind in der Zeichnung nur zwei Anschläge 7 und 8 gezeichnet. Zweckmäßig ist es, wenn mehrere gleichmäßig über dem Umfang verteilte Anschläge vorgesehen sind oder es kann auch ein einziger Ring vorgesehen sein, der die axiale Beweglichkeit der Federteller 4 und 5 begrenzt. Um eine relative Verdrehung der Federteller 4 und 5 gegenüber der Spindel 1 zu verhindern, sind am Umfang der Federteller 4 und 5 Leisten 9 und 10 vorgesehen, die in einer entsprechenden Nut 11 im Inneren der Spindel 1 zu gleiten vermögen. Die Spindel 1 ist wiederum mit Hilfe von Kugellagern 12 und 13 in einem beispielsweise hohlzylinderförmigen Gehäuse 14 drehbar gelagert.

Jedem Federteller 4 bzw. 5 ist mindestens ein auf dem Schieber 2 angeordneter Nocken 15 bzw. 16 zugeordnet, die in bajonettverschlußartigen Ausnehmungen 17 und 18 der Federteller 4 und 5 verrastbar sind. Hierbei sind die am Schieber 2 ausgebildeten Nocken 15 und 16 in bezug auf die bajonettverschlußartigen Ausnehmungen 17 und 18 derart angeordnet, daß zwecks Kupplung des Schiebers 2 mit einem der beiden Federteller 4 oder 5 mit dem Schieber 2 mäanderförmige Axial- und Drehbewegungen ausgeführt werden müssen. Zu diesem Zweck ist der Schieber 2 am hinteren Ende mit einer Handhabe 19 versehen. Damit kann der Schieber 2 sowohl in Pfeilrichtung 20 verschwenkt werden, als auch in axialer Richtung (Pfeil 21) verschoben werden, wie weiter unten noch näher erläutert werden wird.

In der dargestellten Lage des Schiebers 2 liegt der Nocken 15 in axialer Richtung gesehen hinter einem Zacken 22, der in die Ausnehmung 17 ragt. In dieser Stellung ist ein um eine Drehachse 23 schwenkbarer Druckhebel 24 in seiner linken Endstellung in Bezug auf die Zeichnung. Der Druckhebel 24 steht mit dem Schieber 2 über beidseitig des Schiebers angeordnete Gleitsteine 25 in formschlüssiger Verbindung, die in einer entsprechenden Ringnut 26 des Schiebers 2 gleiten. Wird nun der Druckhebel 24 zum Spannen entgegen dem Uhrzeigersinn verschwenkt, so wird der Schieber 2 in Pfeilrichtung 27 bewegt, wobei über die Nocken 15 sowie der Zacken 22 der Federteller 4 unter weiterer Zusammendrückung der Druckfedern 6 ebenfalls in Pfeilrichtung 27 bewegt wird und zwar so weit, daß das rotationssymmetrische Teil in das Backenfutter oder in die entsprechende Spannzange eingeführt werden kann. Sobald nun der Druckhebel 24 freigegeben wird, entspannen sich die Druckfedern 6 soweit es das eingespannte Teil zuläßt. Die rotationssymmetrischen Teile sind nun mit einer ganz bestimmten Vorspannung in dem Backen futter oder in der Spannzange gespannt. Die Spannkraft hängt von der Anzahl und der Stärke der Druckfedern 6 ab. Da auf den Druckhebel 24 keine Kraft mehr einwirkt, ist die kraftschlüssige Verbindung zwischen Druckhebel 24 und dem Schieber 2 aufgehoben, so daß sich die Spindel 1 reibungsfrei drehen kann. Zum Antrieb der Spindel ist diese mit einem Ritzel 28 versehen.

Zum Lösen der eingespannten Teile wird der Druckhebel 24 abermals entgegen dem Uhrzeigersinn verstellt unter Zusammendrückung der Federn 6, so daß die Teile entnommen werden können.

Soll nun die Kraftrichtung der auf den Schieber 2 wirkenden Druckfedern 6 um 180° geändert werden, so wird der Schieber 2 von dem Federteller 4 entkuppelt und anschließend mit dem Federteller 5 gekuppelt. Dies erfolgt dadurch, daß nach Kraftlosmachung des Druckhebels 24 die Handhabe 19 im Uhrzeigersinn so weit gedreht wird, daß der Nocken 15 am Zacken 22 vorbeigeht, das ist, wenn der Nocken 15 die gegenüberliegende Fläche der Ausnehmung 17 berührt. Dieselbe Bewegung führt auch der dem Federteller 5 zugeordnete Nocken 16 aus. Durch axiales Ziehen in Richtung des Pfeiles 27 des Schiebers 2 stößt der Nocken 16 hierbei gegen einen in die Ausnehmung 18 ragenden Zacken 29. Um nun zur Kupplung hinter diesen Zacken 29 zu gelangen, muß mit Hilfe der Handhabe 19 der Nocken 16 wieder entgegen dem Uhrzeigersinn verschwenkt werden, bis er an die gegenüberliegende Fläche der Ausnehmung 18 zum Anschlag gelangt. In dieser Stellung geht der Nocken 16 am Zacken 29 vorbei und kann nun durch Drehen der Handhabe 19 hinter den Zacken 29 gebracht werden. Damit ist die Kupplung des Schiebers 2 mit dem hinteren Federteller 5 hergestellt. Der Schieber führt hierbei eine axiale Bewegung in Pfeilrichtung 27 aus, die auch bewirkt, daß nun der Druckhebel 24 in seine andere Endlage entgegen dem Uhrzeigersinn verschwenkt wird. Wird nunmehr der Druckhebel 24 zum Spannen im Uhrzeigersinn verschwenkt, so wird durch den hinter dem Zacken 29 liegenden Nocken 16 der Federteller 5 entgegen der Pfeilrichtung 27 unter Zusammendrückung der Druckfedern 6 bewegt. Nach dem Einführen des rotationssymmetrischen Teiles in das Backenfutter oder in die Spannzange wird der Druckhebel 24 wiederum freigegeben, wodurch das weitere Spannen des zu bearbeitenden Teiles durch teilweises Entspannen der Druckfeder 6 erfolgt.

Der Druckhebel 24 kann sowohl von Hand als auch pneumatisch oder auf sonstige Weise betätigt werden.

## Ansprüche

1. Mechanische Spanneinrichtung für rotierende Backenfutter oder Spannzangen, bei der rotationssymmetrische Teile von außen oder von innen mit Hilfe vorgespannter Federn spannbar sind, welche in einer Bohrung einer Spindel angeordnet und durch Axialverschiebung einer mit dem Backenfutter bzw. der Spannzange in Verbindung stehenden Zug- oder Druckstange vorspannbar sind, dadurch gekennzeichnet, daß in der Bohrung der Spindel (1) zwei axial verschiebbare scheibenförmige Federteller (4, 5) angeordnet sind, die von zwischen ihnen angeordneten Druckfedern (6) in ihre Endstellungen (7, 8) gedrückt werden, daß zentrisch zuden scheibenförmigen Federtellern (4, 5) ein das Backenfutter bzw. die Spannzange betätigender Schieber (2) angeordnet ist, der im nichtrotierenden Zustand der Spindel (1) wahlweise mit einem der beiden Federteller (4 oder 5) derart kuppelbar ist, daß bei jedem Spannvorgang der jeweils mit dem Schieber (2) gekuppelte Federteller (4 oder 5) entgegen der Kraftrichtung der Druckfedern (6) bewegbar ist.

2. Mechanische Spanneinrichtung nach Anspruch 1, dadurch gekennzeichnet, daß zur Kupplung des Schiebers (2) mit einem der beiden Federteller (4 oder 5) am Schieber (2) mindestens je ein jedem Federteller (4 bzw. 5) zugeordneter Nocken (15, 16) ausgebildet ist, der in einer bajonettverschlußartigen Ausnehmung (17, 18) in der Bohrung des zugeordneten Federtellers (4, 5) einrastbar ist.

3. Mechanische Spanneinrichtung nach Anspruch 2, dadurch gekennzeichnet, daß die am Schieber (2) ausgebildeten Nocken (15, 16) in Bezug auf die bajonettverschlußartigen Ausnehmungen (17, 18) der Federteller (4, 5) derart angeordnet sind, daß zwecks Kupplung des Schiebers (2) mit einem der beiden Federteller (4, 5) mit dem Schieber (2) hintereinander erfolgende Axial- und Drehbewegungen in Mäanderform ausgeführt werden müssen.

4. Mechanische Spanneinrichtung nach einem der Ansprüche 1 bis 3, dadurch gekennzeichnet, daß der Schieber (2) von einem Druckhebel (24) über Gleitführungen (25, 26) betätigbar ist.

## Claims

1. Mechanical clamping device for rotary jaw chucks or collets, with which axially symmetrical components can be clamped from the outside or from within with the aid of preloaded springs which are arranged in a bore of a spindle and which can be preloaded by axial movement of a tensioning or compressing rod which is connected to the jaw chuck or collet, characterised in that in the bore of the spindle (1), there are arranged two axially movable disc-shaped spring plates (4, 5) which are pressed into their end positions (7, 8) by compression springs (6) arranged between the spring plates ; that concentrically with the disc-shaped spring plates (4, 5), there is arranged a slide (2) which actuates the jaw chuck or the collet, as the case may be, and which in the non-rotating position of the spindle (1) can be optionally coupled to one the two spring plates (4 or 5) in such a manner that, in each clamping operation, the respective spring plate (4 or 5) which is coupled to the slide (2) is movable against the direction of the force exerted by the compression springs (6).

2. A mechanical clamping device according to Claim 1, characterised in that for coupling the slide (2) to one of the two spring plates (4 or 5), at least one cam allotted to each spring plate (4 or 5) is formed on the slide (2), which cam can engage in a recess (17, 18), in the nature of a bayonet catch, in the bore of the spring plate (4, 5) to which the cam is allotted.

3. A mechanical clamping device according to Claim 2, characterised in that in relation to the recesses (17, 18) of the spring plates (4, 5), the cams (15, 16) formed on the slide (2) are so arranged that for the purpose of coupling the slide (2) to one of the two spring plates (4, 5), consecutively occurring axial and rotary movements must be carried out with the slide (2) in a key-pattern.

4. A mechanical clamping device according to one of Claims 1 to 3, characterised in that the slide (2) can be operated by a pressure lever (24) by way of sliding guides (25, 26).

**Revendications**

1. Dispositif de serrage mécanique pour des mandrins à mors ou des pinces de serrage rotatives, dans lequel des pièces à symétrie de révolution peuvent être serrées de l'intérieur ou de l'extérieur à l'aide de ressorts précontraints qui sont disposés dans un perçage d'une broche et peuvent être précontraints par déplacement axial d'une tige de traction ou de compression reliée au mandrin à mors ou à la pince de serrage, caractérisé par le fait que dans le perçage de la broche (1) sont disposées deux coupelles de ressort (4, 5) en forme de disques, déplaçables axialement et qui sont repoussées dans leurs positions d'extrémité (7, 8) entre des ressorts de pression (6) qui leur sont associés, qu'en position centrée par rapport aux coupelles de ressort en forme de disques (4, 5) est disposé un poussoir (2) actionnant le mandrin à mors ou la pince de serrage et qui, lorsque la broche (1) ne tourne pas, peut être accouplé au choix avec l'une des deux coupelles de ressort (4 ou 5) de telle sorte que, lors de chaque opération de serrage, la coupelle de ressort (4 ou 5) qui est accouplée au poussoir (2) peut être déplacée à l'encontre de la direction de la force des ressorts de pression (6).

2. Dispositif de serrage mécanique suivant la revendication 1, caractérisé par le fait que pour l'accouplement du poussoir (2) à l'une des deux coupelles de ressort (4, 5), sur le poussoir (2) est disposée au moins une came (15, 16) associée respectivement à chaque coupelle de ressort (4 ou 5) et qui peut être encliquetée dans un évidement (17, 18) en forme de fermeture à baïonnette, située dans le perçage de la coupelle de ressort (4, 5) associée.

3. Dispositif de serrage mécanique suivant la revendication 2, caractérisé par le fait que les cames (15, 16) ménagées sur le poussoir (2) sont disposées par rapport aux évidements (17, 18) en forme de fermeture à baïonnette des coupelles de ressort (4, 5) de telle sorte qu'en vue de réaliser l'accouplement du poussoir (2) avec l'une des deux coupelles de ressort (4, 5), il faut effectuer avec le poussoir (2) des déplacements axiaux et de rotation successifs selon une forme sinueuse.

4. Dispositif de serrage mécanique suivant l'une des revendications 1 à 3, caractérisé par le fait que le poussoir (2) peut être actionné par un levier de pression (24) par l'intermédiaire de guides à glissement (25, 26).